# EUROPEAN PATENT APPLICATION

(11) **EP 4 794 004 A1**
(43) Date of publication of application: **19.08.2026**
(21) Application number: 25205510.8
(22) Date of filing: 30.09.2025
(51) Int. Cl.: H01M 4/13, H01M 4/131, H01M 4/505, H01M 4/525, H01M 10/052

(54) **POSITIVE ELECTRODE FOR RECHARGEABLE LITHIUM BATTERY AND RECHARGEABLE LITHIUM BATTERY INCLUDING THE POSITIVE ELECTRODE**

(30) Priority: 12.02.2025 KR 20250018235
(71) Applicant: SAMSUNG SDI CO., LTD., Yongin-si, Gyeonggi-do 17084 (KR)
(72) Inventor: Kim, Keewook, Yongin-si, Gyeonggi-do 17084 (KR)
(74) Representative: Gulde & Partner

(57) **Abstract**

A positive electrode for a rechargeable lithium battery includes a positive electrode current collector and a positive electrode active material layer on the positive electrode current collector. The positive electrode is a rectangle shape having a horizontal length that is longer than its vertical length and having upper and lower sides that are equal length. The positive electrode active material layer includes two trapezoidal patterns formed in its surface. The two trapezoidal patterns have short sides that are adjacent to each other, and long sides of the two trapezoidal patterns are adjacent to the upper and lower sides of the positive electrode active material layer.

## Description

### BACKGROUND

### 1. Field

A positive electrode for a rechargeable lithium battery and a rechargeable lithium battery including the positive electrode are disclosed.

### 2. Description of the Related Art

A rechargeable lithium battery may be recharged and has three or more times energy density per unit weight compared to a conventional lead storage battery, nickelcadmium battery, nickel hydrogen battery, nickel zinc battery and the like. A rechargeable lithium battery may be also charged at a high rate. Thus, rechargeable lithium batteries are commercially manufactured for laptops, cell phones, electric tools, electric bikes, and the like, and there has been research into providing additional energy density in rechargeable lithium batteries.

Such a rechargeable lithium battery is manufactured by injecting an electrolyte solution into an electrode assembly that includes a positive electrode including a positive electrode active material capable of intercalating/deintercalating lithium ions and a negative electrode including a negative electrode active material capable of intercalating/deintercalating lithium ions.

In general, abnormal heating may occur in 10 charge/discharge cycles of a rechargeable lithium battery occurs. To improve reliability of a rechargeable lithium battery, it is necessary to suppress the abnormal heating phenomenon.

### SUMMARY

The invention is defined by the appended claims. The description that follows is subjected to this limitation. Any disclosure lying outside the scope of said claims is only intended for illustrative as well as comparative purposes.

Some example embodiments provide a positive electrode for a rechargeable lithium battery that suppresses an abnormal heat generation phenomenon and improves the reliability of the rechargeable lithium battery.

Some example embodiments provide a positive electrode including a positive electrode current collector and a positive electrode active material layer on the positive electrode current collector; wherein the positive electrode is a rectangular shape having a horizontal length that is longer than its vertical length, and having upper and lower sides are equal length; the positive electrode active material layer includes two trapezoidal patterns formed in a surface of the positive electrode active material; the trapezoidal patterns have short sides that are adjacent to each other; long sides of the two trapezoidal patterns are adjacent to the upper and lower sides of the positive electrode active material layer.

According to further example embodiments, a positive electrode for a rechargeable lithium battery is provided, with the positive electrode comprising a positive electrode current collector and a positive electrode active material layer on the positive electrode current collector, the positive electrode includes a first side that is longer than a second side that is opposite to the first side, the positive electrode includes third and fourth sides that are opposite to each other and have equal lengths, a first trapezoidal pattern and a second trapezoidal pattern are formed in the positive electrode active material layer, a short side of the first trapezoidal pattern is adjacent to a short side of the second trapezoidal pattern, a long side of the first trapezoidal pattern is adjacent to the third side of the positive electrode active material layer, and long side of the second trapezoidal pattern is adjacent to the fourth side of the positive electrode active material layer

Some example embodiments provide a rechargeable lithium battery including the positive electrode according to some example embodiments.

The positive electrode according to the above embodiments can prevent abnormal heat generation and improve the reliability of a rechargeable lithium battery.

### BRIEF DESCRIPTION OF THE DRAWINGS

FIG. 1A is a view of a surface view of a positive electrode according to some example embodiments, FIG. 1B is a view of a surface view of a positive electrode without a pattern, FIG. 1C is a view of a surface view of a positive electrode having a vertical pattern, and FIG. 1D is a view of a surface of a positive electrode having a diagonal pattern.
FIGS. 2 to 5 are views of rechargeable lithium batteries according to some example embodiments.

### DETAILED DESCRIPTION

Hereinafter, embodiments of the present disclosure will be described in detail. However, these embodiments are exemplary, the present disclosure is not limited to the expressly disclosed embodiments.

As used herein, when specific definition is not otherwise provided, it will be understood that when an element such as a layer, film, region, or substrate is referred to as being "on" another element, it can be directly on the other element or intervening elements may also be present.

As used herein, when specific definition is not otherwise provided, the singular may also include the plural

As used herein, "combination thereof" may mean a mixture, a stack, a composite, a copolymer, an alloy, a blend, or a reaction product of constituents.

### (Positive Electrode)

Abnormal heating phenomenon may occur because gas, which is generated during charging and discharging of a rechargeable lithium battery, is not smoothly discharged. The gas physically separates positive electrodes and negative electrodes, locally increases resistance, and deposits lithium (Li) metal on the negative electrode surface. The lithium metal deposited on the negative electrode surface creates micro holes in a separator disposed between the positive and negative electrodes and thereby causes micro shorts that generate heat. The micro shorts may end with a shutdown of the separator.

Example embodiments of the present disclosure provide a positive electrode for a rechargeable lithium battery including a positive electrode current collector and a positive electrode active material layer on the positive electrode current collector. The positive electrode is rectangular shaped with a horizontal length that is longer than its vertical length and with equal length upper and lower sides. The positive electrode active material layer has two trapezoidal patterns on its surface, with the two trapezoidal patterns having short sides that are in contact with each other, and with long sides of the two trapezoidal patterns in contact with the upper and lower sides of the positive electrode active material layer. Previous pattern shapes in positive electrodes have limitations with respect to suppressing abnormal heating and the temperature rise, but the trapezoidal patterns are an improvement in this regard.

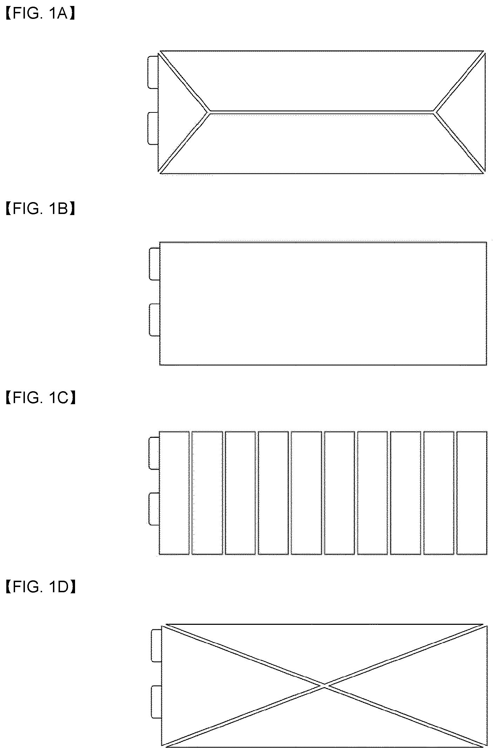

FIG. 1A is a view of a surface of a positive electrode according to some example embodiments, FIG. 1B is a view of a surface of a positive electrode without a pattern, FIG. 1C is a view of a surface of a positive electrode having a vertical pattern, and FIG. 1D is a view of a surface of a positive electrode having a diagonal pattern

As will be described later, when using the positive electrode in a rechargeable lithium battery, the positive electrode, a separator, and a negative electrode may be stacked and then wound. In such an arrangement, in the two trapezoidal patterns where the short sides are in contact with each other, the corners of each acute section are located at both ends of the wound stack. Thus, gas discharge effect is excellent and heat generation and temperature rise can be significantly suppressed. Accordingly, by using the positive electrode of some example embodiments, even if gas is generated during charging and discharging during formation of a rechargeable lithium battery, the gas may be efficiently discharged, and the occurrence of a gaps between the positive electrode and the negative electrode, local resistance increase, and lithium (Li) metal precipitation on the surface of the positive electrode can be effectively suppressed. Thus, the positive electrode of some example embodiments may significantly suppress abnormal heat generation and temperature rise compared to the pattern shapes in prior art positive electrodes.

Hereinafter, a positive electrode for a rechargeable lithium battery according to the embodiments of the present disclosure is described in detail.

### Pattern

The two trapezoidal patterns may each be engraved patterns that form passages for gas discharge. The engraved pattern of each of the two trapezoidal patterns may be formed at a depth of 1 to 50%, 5 to 20%, or 10 to 15% from the surface of the positive electrode active material layer. The width of each of the two trapezoidal patterns may be 0.5 to 10 µm, 1 to 8 µm, or 3 to 5 µm. The short side length of each of the two trapezoidal patterns may be 5:100 to 95:100, 10:100 to 90:100, or 30:100 to 60:100 of the long side length. An obtuse angle of the short side of each of the two trapezoidal patterns may be 100 ° to 170 °, 110 ° to 160 °, or 120 ° to 150 °. An acute angle of the long side of each of the two trapezoidal patterns may be 10 ° to 80 °, 20 ° to 70 °, or 35 ° to 55 °.

When the above ranges are satisfied, gas discharge is improved and abnormal heat generation and temperature rise may be significantly suppressed.

### Positive Electrode Active Material

The positive electrode active material may be a compound (lithiated intercalation compound) capable of intercalating and deintercalating lithium. Specifically, one or more types of composite oxides of lithium and a metal selected from cobalt, manganese, nickel, and combinations thereof may be used.

The composite oxide may be a lithium transition metal composite oxide, and specific examples include a lithium nickel-based oxide, a lithium cobalt-based oxide, a lithium manganese-based oxide, a lithium iron phosphate-based compound, a cobalt-free lithium nickel-manganese-based oxide, or a combination thereof. As an example, a compound represented by any of the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8). In these chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a lithium nickel-based oxide represented by the following Chemical Formula 11, a lithium cobalt-based oxide represented by the following Chemical Formula 12, a lithium iron phosphate-based compound represented by the following Chemical Formula 13, a cobalt-free lithium nickel-manganese-based oxide represented by the following Chemical Formula 14, or a combination thereof.

Chemical Formula 11: Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are each independently one or more of Al, B, Ba, Ca, Ce, Co, Cr, Cu, Fe, Mg, Mn, Mo, Nb, Si, Sn, Sr, Ti, V, W, and Zr, and X is one or more selected from F, P, and S. In further embodiments, 0.6≤x1≤1, 0≤y1≤0.4, and 0≤z1≤0.4, or 0.8≤x1≤1, 0≤y1≤0.2, and 0≤z1≤0.2.

Chemical Formula 12: Liₐ₂Coₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ is one or more of Al, B, Ba, Ca, Ce, Cr, Cu, Fe, Mg, Mn, Mo, Ni, Se, Si, Sn, Sr, Ti, V, W, Y, Zn, and Zr, and X is one or more of F, P, and S.

Chemical Formula 13: Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is one or more of Al, B, Ba, Ca, Ce, Co, Cr, Cu, Mg, Mn, Mo, Ni, Se, Si, Sn, Sr, Ti, V, W, Y, Zn, and Zr, and X is one or more of F, P, and S.

Chemical Formula 14: Liₐ₄Niₓ₄ Mn_{y4}M⁵_{z4}O_{2-b4}X_{b4}

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is one or more of Al, B, Ba, Ca, Ce, Cr, Fe, Mg, Mo, Nb, Si, Sn, Sr, Ti, V, W, and Zr, and X is one or more of F, P, and S.

For example, the positive electrode active material may be a high-nickel positive electrode active material in which the nickel amount is greater than or equal to 80 mol%, greater than or equal to 85 mol%, greater than or equal to 90 mol%, greater than or equal to 91 %, or greater than or equal to 94 mol% and less than or equal to 99 mol%, based on 100 mol% of metal in the lithium transition metal composite oxide excluding lithium. The high-nickel positive electrode active material can provide high capacity and used in high-capacity, high-density rechargeable lithium batteries.

### Positive Electrode

The positive electrode for the rechargeable lithium battery may include a current collector and a positive electrode active material layer formed on the current collector.

The positive electrode active material layer may include a positive electrode active material and may further include a binder and/or a conductive material. The positive electrode may further include an additive that can function as a sacrificial positive electrode.

An amount of the positive electrode active material may be 90 wt% to 99.5 wt% based on 100 wt% of the positive electrode active material layer. The amount of the binder and the conductive material may each be 0.5 wt% to 5 wt% based on 100 wt% of the positive electrode active material layer.

The binder improves binding properties of positive electrode active material particles with one another and with a current collector. Examples of binders include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity and any electrically conductive material that does not cause a chemical change in a battery may be used as a conductive material. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

### (Rechargeable Lithium Battery)

Some example embodiments provide a rechargeable lithium battery including the positive electrode according to the above embodiments, a negative electrode, and a separator between the positive electrode and the negative electrode.

In a rechargeable lithium battery of some example embodiments, the stack of the positive electrode, the separator, and the negative electrode may be wound. In such a configuration, the horizontal length of the positive electrode may be the winding direction of the stack. As a result, the gas discharge effect to both ends of the wound stack is excellent, and t heat generation and temperature rise may be significantly suppressed. Accordingly, the rechargeable lithium battery of example embodiments may efficiently discharge gas generated during a formation charge/discharge stage and thereby effectively prevent a gap from being formed between the positive and negative electrodes, prevent increases in local resistance, and prevent lithium (Li) metal precipitation on the negative electrode surface.

Hereinafter, descriptions of the above will be omitted, and a rechargeable lithium battery according to some example embodiments will be described in detail.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy, or a combination thereof. In the formula Si-Q, Q is an element selected from an alkali metal, an alkaline-earth metal, a Group 13 element, a Group 14 element (excluding Si), a Group 15 element, a Group 16 element, a transition metal, a rare earth element, and a combination thereof. The Sn-based negative electrode active material may be Sn, SnO₂, a Sn-based alloy, or a combination thereof.

The silicon-carbon composite may be a composite of silicon and amorphous carbon. According to example embodiments, the silicon-carbon composite may be in the form of silicon particles and amorphous carbon coated on the surfaces of the silicon particles. For example, silicon-carbon composite may include a secondary particle (core) in which silicon primary particles are assembled and an amorphous carbon coating layer (shell) on the surfaces of the secondary particles. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.

The Si-based negative electrode active material or Sn-based negative electrode active material may be mixed with the carbon-based negative electrode active material.

### Negative Electrode

A negative electrode for a rechargeable lithium battery includes a current collector and a negative electrode active material layer on the current collector. The negative electrode active material layer includes a negative electrode active material and may further include a binder and/or a conductive material. For example, the negative electrode active material layer may include 90 wt% to 99 wt% of the negative electrode active material, 0.5 wt% to 5 wt% of the binder, and 0.5 wt% to 5 wt% of the conductive material.

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder is a polymer material capable of being fiberized. The dry binder, may be, for example, polytetrafluoroethylene, polyvinylidene fluoride, polyvinylidene fluoride-hexafluoropropylene copolymer, polyethylene oxide, or a combination thereof.

The conductive material is included to provide electrode conductivity and any electrically conductive material may be used as a conductive material that does not cause a chemical change in a battery. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum silver, and the like; a conductive polymer such as a polyphenylene derivative; or a mixture thereof.

The negative electrode current collector may include one of a copper foil, a nickel foil, a stainless steel foil, a titanium foil, a nickel foam, a copper foam, a polymer substrate coated with a conductive metal, and a combination thereof.

### Electrolyte Solution

An electrolyte solution for a rechargeable lithium battery includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone or in a mixture of two or more types.

In addition, when using a carbonate-based solvent, a cyclic carbonate and a chain carbonate may be mixed and used, and the cyclic carbonate and the chain carbonate may be mixed in a volume ratio of 1:1 to 1:9.

The electrolyte solution may further include vinylethyl carbonate, vinylene carbonate, fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, or a combination thereof as an additive.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

### Separator

Depending on the type of rechargeable lithium battery, a separator may be present between the positive and negative electrodes. The separator may include polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited thereto.

The organic material and the inorganic material may be mixed in one coating layer. In other embodiments, a first coating layer including an organic material and a second coating layer including an inorganic material may be stacked.

### Rechargeable Lithium Battery

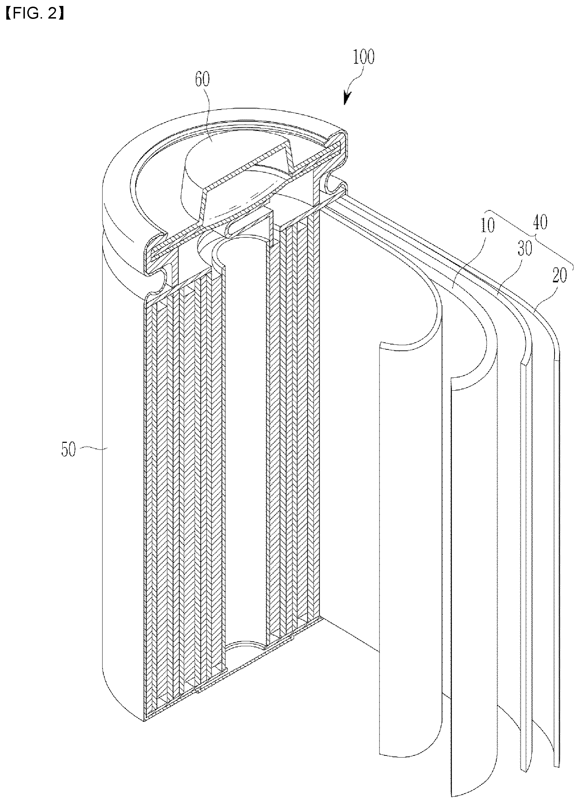

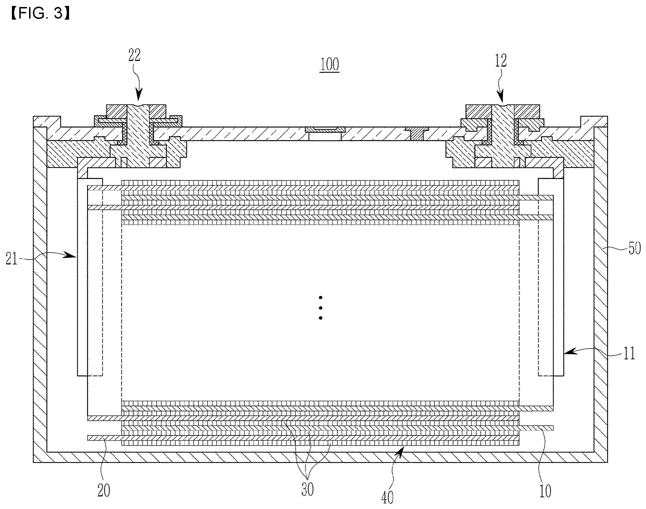

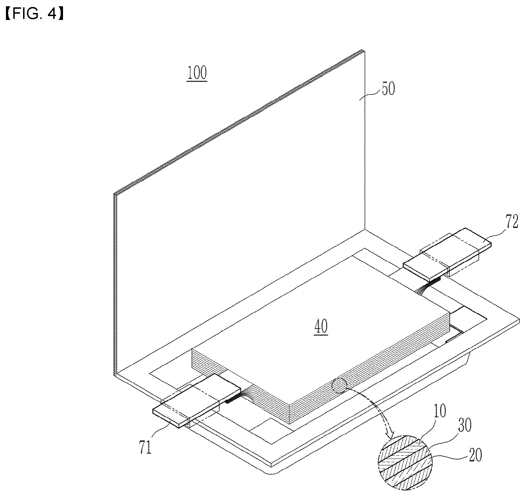

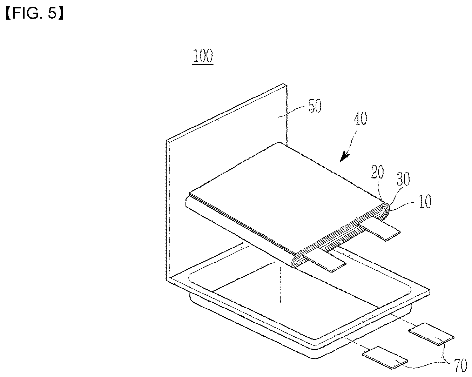

The rechargeable lithium battery may be a cylindrical, prismatic, pouch, or coin-type batteries, and the like depending on its shape. FIGS. 2 to 5 are schematic views showing rechargeable lithium batteries according to some example embodiments. FIG. 2 is a cylindrical battery, FIG. 3 is a prismatic battery, and FIGS. 4 and 5 are a pouch-shaped battery. Referring to FIGS. 2 to 5, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 2. As shown in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, that is, a positive electrode tab 71 and a negative electrode tab 72 forming an electrical path for inducing the current formed in the electrode assembly 40 to outside of the rechargeable lithium battery 100.

The rechargeable lithium battery according to some example embodiments may be used in automobiles, mobile phones, and/or various types of electrical devices. But the present disclosure is not limited to these examples.

Examples and comparative examples of the present disclosure are described below. However, the following examples are only examples of the present disclosure, and the present disclosure is not limited to the following examples.

### Example 1

### (1) Manufacturing of Positive Electrode

To make a positive electrode, a positive electrode current collector was formed from an aluminum foil with a thickness of 12 µm.

A positive electrode slurry was prepared by mixing LiNi_{0.91}Co_{0.05}Al_{0.04}O₂ as a positive electrode active material, polyvinylidene fluoride (PVDF) as a binder, and carbon as a conductive agent in a weight ratio of 92:4:4 and then, dispersing the mixture in N-methyl-2-pyrrolidone. The positive electrode slurry was coated on a 150 µm thick on the aluminum foil to form a positive electrode active material layer.

On the surface of the positive electrode active material layer, two trapezoidal patterns as shown in FIG. 1A were formed. The two trapezoidal patterns were engraved so that short sides were adjacent to each other and long sides were adjacent to the upper and lower sides of the positive electrode active material layer.

Each of the two trapezoidal patterns was formed to a depth of 15% from the surface of the positive electrode active material layer. The two trapezoidal patterns were formed to have each width of 5 µm, an obtuse angle of the short sides of 120°, a length ratio of the short sides and the long sides of 50:100, and an acute angle of the long sides of 60°.

### (2) Manufacturing of Rechargeable Lithium Battery Cell

Artificial graphite and silicon particles were mixed in a weight ratio of 93.5:6.5 to prepare a negative electrode active material, and the negative electrode active material, styrene-butadiene rubber binder, and carboxylmethyl cellulose were mixed in a weight ratio of 97:1:2 and then dispersed in distilled water to prepare a negative electrode slurry.

The negative electrode active material slurry was coated to be 8 µm thick on a Cu foil, dried at 100 °C, and then pressed to form a negative electrode active material layer.

An electrolyte solution was prepared by mixing 1.5 M lithium salt (LiPF₆) with a carbonate solvent including ethylene carbonate (EC): ethyl methyl carbonate (EMC): dimethyl carbonate (DMC) mixed in a volume ratio of 20:40:40.

The manufactured positive electrode, a PE separator, and the negative electrode were stacked, wounded, and then inserted into a prismatic case. The electrolyte solution was injected into the prismatic case to thereby form a rechargeable lithium battery cell.

### Example 2

A positive electrode and a rechargeable lithium battery cell were made in the same manner as in Example 1 except that the widths of the two trapezoidal patterns were changed to 3 µm.

### Example 3

A positive electrode and a rechargeable lithium battery cell were made in the same manner as in Example 1 except that the widths of the two trapezoidal patterns were changed to 8 µm.

### Example 4

A positive electrode and a rechargeable lithium battery cell were made in the same manner as in Example 1 except that the depths of the two trapezoidal patterns were changed to 30%.

### Example 5

A positive electrode and a rechargeable lithium battery cell were made in the same manner as in Example 1 except that the depths of the two trapezoidal patterns were changed to 10%.

### Comparative Example 1 (Ref.)

A positive electrode and a rechargeable lithium battery cell were made in the same manner as in Example 1 except that the two trapezoidal patterns were not formed.

### Comparative Example 2

A vertical pattern as shown in FIG. 1B was formed on the surface of the positive electrode active material layer.

The vertical pattern was engraved to a depth of 15% from the surface of the positive electrode active material layer. The vertical engraved pattern had a width of 5 µm, and four vertical engraved patterns in total were formed by setting a distance between different patterns to 20% of the long side.

Other than the vertical patterns in the positive electrode, the rechargeable lithium battery cell of Comparative Example 2 was made in the same manner as in Example 1.

### Comparative Example 3

A horizontal pattern as shown in FIG. 1C was formed on the surface of the positive electrode active material layer.

The horizontal pattern was engraved to a depth of 15% from the surface of the positive electrode active material layer. In addition, the horizontal engraved pattern had a width of 5 µm, and four horizontal engraved patterns in total were formed by setting a distance between different patterns to 20% of the short side.

Other than the vertical patterns in the positive electrode, the rechargeable lithium battery cell of Comparative Example 3 was made in the same manner as in Example 1.

### Comparative Example 4

Two diagonal patterns as shown in FIG. 1D was formed on the surface of the positive electrode active material layer.

The diagonal patterns were engraved to a depth of 15% from the surface of the positive electrode active material layer. The width was made to be 5 µm, forming a total of two diagonal engraved patterns.

Other than the diagonal patterns in the positive electrode, the rechargeable lithium battery cell of Comparative Example 4 was made in the same manner as in Example 1.

### Evaluation Examples

Each of the example and comparative example rechargeable lithium battery cells was evaluated in the following method, and the results are shown in Tables 1 and 2 below.

The battery cells were connected to a charger in an environment with an ambient temperature of 55 °C. After 10 times charging and discharging the cells under the conditions of 0.33/0.33 C cut-off 0.05 V, a thermo couple was attached to the cells to measure temperatures.

An abnormal heating occurrence was considered to occur when a temperature rise by 5 °C or higher occurred during the 10 charging and discharging cycles The abnormal heating occurrence probability was measured by respectively evaluating 20 cells.

**(Table 1)**

| | Pattern shape | Abnormal heating probability (%) | Temperature rise (°C) |
|---|---|---|---|
| Example 1 | trapezoidal | 0 | 1-2 |
| Example 2 | trapezoidal | 0 | 2-3 |
| Example 3 | trapezoidal | 0 | 2-3 |
| Example 4 | trapezoidal | 0 | 2-3 |
| Example 5 | trapezoidal | 0 | 2-3 |
| Comparative Example 1 | None | 80 | 6-10 |
| Comparative Example 2 | Vertical | 30 | 6-10 |
| Comparative Example 3 | Horizontal | 30 | 6-10 |
| Comparative Example 4 | Diagonal | 10 | 6-10 |

As indicated by the results shown in Table 1, the positive electrodes of Examples 1 to 5 prevented an abnormal heat occurrence and improved reliability of the rechargeable lithium battery cells.

## Claims

1. A positive electrode (10) for a rechargeable lithium battery (100), the positive electrode (10) comprising:
a positive electrode current collector and a positive electrode active material layer on the positive electrode current collector,
wherein the positive electrode (10) is a rectangular shape having a horizontal length that is longer than its vertical length and having upper and lower sides that are equal length,
wherein the positive electrode active material layer includes two trapezoidal patterns formed in a surface of the positive electrode active material,
wherein the trapezoidal patterns have short sides that are adjacent to each other, and
wherein long sides of the trapezoidal patterns are adjacent to the upper and lower sides of the positive electrode active material layer.

2. The positive electrode (10) for the rechargeable lithium battery (100) as claimed in claim 1, wherein the trapezoidal patterns are engraved in the positive electrode active material layer.

3. The positive electrode (10) for the rechargeable lithium battery (100) as claimed in claim 2, wherein each of the engraved trapezoidal patterns is formed at a depth of 1 to 50% from a surface of the positive electrode active material layer.

4. The positive electrode (10) for the rechargeable lithium battery (100) as claimed in any one of the preceding claims, wherein a width of each of the engraved trapezoidal patterns is 0.5 to 10 µm.

5. The positive electrode (10) for the rechargeable lithium battery (100) as claimed in any one of the preceding claims, wherein a ratio of a short side length and a long side length of each of the trapezoidal patterns is 5:100 to 98:100.

6. The positive electrode (10) for the rechargeable lithium battery (100) as claimed in any one of the preceding claims, wherein an obtuse angle relative to a short side of each of the trapezoidal patterns is 100 ° to 170 °.

7. The positive electrode (10) for the rechargeable lithium battery (100) as claimed in any one of the preceding claims, wherein an acute angle relative to a long side of each of the trapezoidal patterns is 10 ° to 80 °.

8. The positive electrode (10) for the rechargeable lithium battery (100) as claimed in any one of the preceding claims, wherein the positive electrode active material comprises at least one composite oxide that includes lithium and at least one of cobalt, manganese, and nickel.

9. A rechargeable lithium battery (100), comprising:
the positive electrode (10) as claimed in claim 1;
a negative electrode (20); and
a separator (30) between the positive electrode (10) and the negative electrode (20).

10. The rechargeable lithium battery (100) as claimed in claim 9, wherein the positive electrode (10), the separator (30), and the negative electrode (20) are stacked and wound.

11. The rechargeable lithium battery (100) as claimed in claim 9 or 10, wherein the rechargeable lithium battery (100) further comprises an electrolyte solution impregnated in the separator (30).
